# EUROPEAN PATENT APPLICATION

(11) **EP 2 797 011 A1**
(43) Date of publication of application: **29.10.2014**
(21) Application number: 13305541.8
(22) Date of filing: 25.04.2013
(51) Int. Cl.: G06F 17/30

(54) **Method of and apparatus for providing access to content in a database based on environment-derived contextual information**

(71) Applicant: Thomson Licensing, 92130 Issy-les-Moulineaux (FR)
(72) Inventor: Thudor, Franck, 35000 Rennes (FR); Demoulin, Vincent, 35160 Montfort sur Mer (FR); Vigouroux, Jean-Ronan, 35000 Rennes (FR)
(74) Representative: Lindemann, Robert

(57) **Abstract**

A method of providing access to content stored in a database includes acquiring contextual information relating to an environment in which the method is performed. A set of descriptive features is extracted from the contextual information, and elements from the extracted set of descriptive features are matched with corresponding sets of descriptive features associated with content items stored in the database. One or more content items are selected according to a rule, e.g. when a matching ratio exceeds a predetermined value, and are reproduced on a user's device.

## Description

### FIELD

The invention relates to a method of and an apparatus for providing access to database content based on contextual information derived from contextual information. In the following specification environment-derived contextual information relates to the environment in which a user is located when the method is invoked. Further detail will be provided further below in connection with the summary of the invention and the description of embodiments.

### BACKGROUND

There are situations in which a user wishes to have access to content, for example audio and/or video content, based on an environmental setting, or mood. Such a setting may be a specific landscape at a certain time of day, e.g. sunset. For many people such a setting corresponds to a mood. The mood of a particular setting may be different for individuals from different cultural background, but many people from the same cultural background may have a similar emotional attitude towards such a specific setting. It is to be noted that the emotional attitude towards an environmental setting represents only one aspect of the invention, and that there are many more connections between an environmental setting and database content that can be used along with the present invention, including but not limited to professional or plain personal interest, curiosity, the desire for distraction, etc.

Known methods of database access that are remotely related to using an environmental setting sample a part of an audio or video program for identifying the audio or video program. The user may then decide to use the name of the identified audio or video program for purchasing a copy thereof, for programming a video recorder accordingly, or the like. Such known method is disclosed for example in US2012/0150903 A1. US2012/0150903 A1 discloses capturing a portion of an audio-visual program for identifying the program. The identified program, or, more general audio-visual content, is then offered for reproduction, recording, purchase, or the like.

Another method of database access is implemented in audio guides used in museums. These audio guides produce audio guide information in response to changes in context, e.g. through infra-red or short-range wireless activation of a specific track for playback.

However, the known methods exclusively identify content for providing options in relation to the same content, or trigger access to a local database in accordance with a fixed structure, e.g. one that is preset through the museum's layout and operator.

### SUMMARY

A method in accordance with the invention provides access to content stored in a database by first acquiring contextual information relating to an environment in which the method is performed. The environment is, for example, a location in which a user is located, which user operates a device that ultimately performs the method. Contextual information includes environmental variables that can be measured by all kinds of sensors. Such sensors include, inter alia, cameras microphones, light sensors, receivers for modulated or unmodulated electromagnetic radiation. The environmental or contextual information acquired includes one or more from the non-exclusive list comprising still images, video, geographical location, current date, current time of day, weather information, ambient light, radio stations, wireless access points, or ambient noise. In an embodiment of the invention, the contextual information does not form part of the content stored in the database. In another embodiment the contextual information belongs to a different class, e.g., if the environmental information is a photography, the database content is anything but a photography.

In a next step, a set of descriptive features is extracted from the contextual information. The extraction can be performed in the user device, or in a device remote from the user device. In the latter case, the sensor information representing the contextual information is transmitted, either compressed or as raw data, to the device remote from the user device. The remote device can be, e.g. a server, and the transmission can be effected through a wireless communication link, e.g. a wireless LAN or a mobile telephone link. In the former case, the communication links used are the same, but the transmitted information is reduced to the relevant descriptive features. Of course a combination of transmitting unprocessed and processed contextual information is also conceivable. Such splitting up of processing tasks can be done depending on the processing power and capabilities of the user's device. Descriptive features include, for example, one or more from the non-exclusive list comprising prevailing color in a photograph or video, prevailing frequency in an audio signal and/or electromagnetic radiation signal, repetition pattern, illumination level, humidity, barometric air pressure, temperature, or dominant visual objects.

In a further step elements from the extracted set of descriptive features are matched with corresponding elements from the sets of descriptive features associated with content items stored in the database. The matching process itself can use any suitable matching method known to the skilled person. Content items include, inter alia, audio items, video items, or text.

Then, one or more content items for which a matching ratio exceeds a predetermined value are selected. The matching ratio may be user-adjustable, e.g. by using values in a given range, or by using fuzzy descriptors.

Finally, the selected content items are reproduced. In an embodiment reproduction is preceded by a presentation step, in which a list of items is presented to the user for taking further actions, or for selective reproduction of individual items in response to an according user input. If the content items are audio files, the items on the list may be reproduced sequentially like in an audio playlist.

In one embodiment the content items is audio content, e.g. music tracks, and the contextual information is non-audio in nature. Content selected from the database is reproduced in accordance with a playlist. In a development the playlist is predefined and is selected based on a match of descriptive features of at least one item from the predefined playlist and the contextual information, i.e., one or more items from the playlist may not have descriptive features having a matching ratio exceeding the predetermined value.

In one embodiment the playlist is provided to the user device, allowing a user to make a further selection from within the playlist for determining which items from the playlist are to be reproduced.

Content items can take other formats, e.g. text file. In such case the text may be reproduced on a display for reading, or may be parsed through a text-to-file engine for reading out loud. Other reproduction of content returned in response to the extraction and identification includes providing haptic feedback, e.g. vibrating a user's device.

The terms environmental information and contextual information are used interchangeably throughout this specification, unless specifically stated otherwise.

A user device implementing an aspect of the inventive method includes a microprocessor, program memory, data memory, a data interface, environment sensors and a user interface. The environment sensors include sensors capable of sensing the environment variables as discussed further above. The user interface provides means for user input including touch screens, input keys, dials and the like, but also output means including a display and loudspeakers, or according interfaces for connecting displays and loudspeakers. The device stores program code in the program memory that, when executed, performs the inventive method described further above. The data memory holds data that is created and/or required during the execution of the method. If the method is implemented in a single device, the data memory also includes the database that is accessed in accordance with the invention. Program and data memory can be of the volatile or non-volatile type, including but not limited to static or dynamic random access memory, also referred to as SRAM or DRAM, flash memory, magnetic or optical disk drives and the like. The data interface can be wired or wireless and is of commonly known type, e.g. LAN, USB, wireless LAN, GSM, UMTS, LTE, or the like. The individual elements of the apparatus are connected through one or more data buses as appropriate.

A second device, remote from a user device, in which the extraction of a set of descriptive features is performed on data received from the user device, and which second device implements a further aspect of the inventive method, includes a microprocessor, program memory, data memory, a data interface and a data base. The device stores program code in the program memory that, when executed, performs the inventive method according to the further aspect described above. The data memory holds data that is created and/or required during the execution of the method. Program and data memory can be of the volatile or non-volatile type, including but not limited to static or dynamic random access memory, also referred to as SRAM or DRAM, flash memory, magnetic or optical disk drives and the like. The data interface can be wired or wireless and is of commonly known type, e.g. LAN, USB, wireless LAN, GSM, UMTS, LTE, or the like. The individual elements of the apparatus are connected through one or more data buses as appropriate.

A system implementing the further aspect of the inventive method includes at least a user device and a second device that are operatively connected through the data interfaces. In the system the user device is adapted to provide sensor information about the environment of the user device, and to reproduce data provided in response to the database access. The second device is connected to the database, or incorporates the database, and accesses data stored in the database in accordance with descriptive features extracted from the environment information. The feature extraction can be performed in the user device or in the second device, or can be partially performed in either of the devices.

In one embodiment the first and second device are combined in a single device.

An exemplary use case of the invention is accessing a database storing a large number of music tracks. More particular, the technical problem of this exemplary use case to be solved is the automatic selection of songs from a database containing a large number of songs, wherein the seed, i.e. the starting point for selection, is an external information, i.e. a non-music information derived from the environment of the user. For example, the seed is a still image, a group of still images or a video sequence, or any other contextually relevant information such as the position of the user device, the time of day or any other information. The invention advantageously benefits from image indexing and matching techniques, e.g. for enabling searching a database storing a large number of movies for the closest original images from the movies corresponding to an image of the environment of the user device. In this example the soundtrack of the movie or movies identified as having images closest to the user environment are used as seed for playlist creation. The playlist is then proposed to the user for reproduction.

In the foregoing exemplary use case a user takes a picture of where he or she is. This picture is sent, along with optional complementary information such as GPS position, time of day, etc., as a query to a database of images coming from movies. The music or songs associated with a movie that has images matching closely with the picture taken by the user are returned to the user as a playlist.

For example, GPS location and image from a scene taken by the user indicate the user is in a baroque garden. Accordingly baroque music is added to a playlist and provided to the user.

In an embodiment an image results in no useful content for reproduction, but barometric air pressure, temperature and properties of ambient light indicate a warm summer day. Accordingly light summer music is added to playlist and provided to the user.

In a variant of the preceding example, a user could preset an "inverted matching pattern", providing in contrasting results, e.g. play light summer music when the sensor input indicates a cold and wet autumn or winter day.

In a development of the exemplary use case of the invention this process can automatically and dynamically provide a playlist associated to a user's environment, e.g., when the camera is embedded in the user's car, takes pictures at regular and/or user-settable intervals, and accordingly issues database queries for obtaining updated playlists. It is also conceivable to use video sequences rather than still images as environmental information in this or any other embodiment of the invention as described in this specification.

In all of the embodiments and variations of the invention described in this specification all kinds of supplementary data relating to the environment such as location, lighting, weather, date, time, noise, etc. can be used in the analysis process for refining database access and data delivered.

The invention advantageously complements the context of a scene or situation in which the user is located with supplementary content, including content of a different nature or category, that is related to the context. A low latency delivery of the supplementary content provides a quasi-immediate enhanced user experience.

### BRIEF DESCRIPTION OF DRAWINGS

The invention will be described in the following with reference to the drawings, in which
- Fig. 1: shows a simplified overview of the elements and steps in accordance with the inventive method;
- Fig. 2: shows an exemplary flow diagram of the inventive method;
- Fig. 3: represents an exemplary flow diagram of an embodiment of the inventive method;
- Fig. 4: depicts a simplified overview of the elements and high-level steps involved in populating a database used in accordance with an embodiment of the inventive method;
- Fig. 5: is an illustration of a simplified block diagram of an exemplary user device implementing an aspect of the inventive method; and
- Fig. 6: shows a simplified block diagram of an exemplary second device implementing a further aspect of the inventive method.

In the figures like elements are referenced with the same reference designators.

### DETAILED DESCRIPTION OF EMBODIMENTS

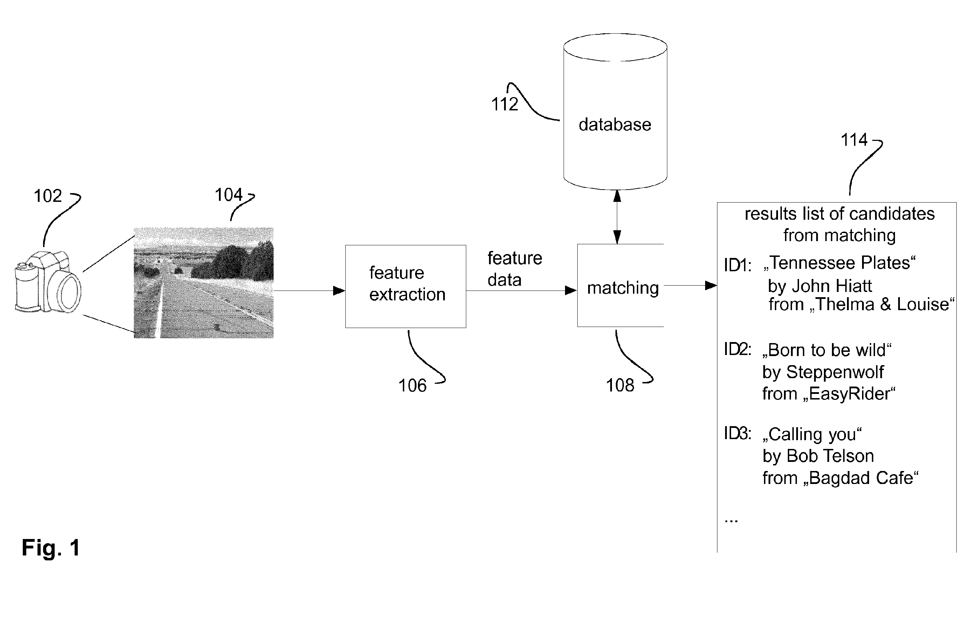

Figure 1 shows a simplified overview of the elements and high-level steps involved in the inventive method. Camera 102 is used for taking picture 104 of an environment in which the user and the camera are located. Descriptive features of the picture are extracted, box 106, and the feature data is transmitted to a matching process, 108. Matching process 108 accesses database 112, which stores feature data sets and associated content, and matches the feature data extracted from the image and the stored feature data sets. When a matching result exceeds a predefined value, the resulting data is added to results list 114. This is one example of a rule for selecting content. However, the present invention is not limited to this specific rule.

In a development of the embodiment shown in figure 1, not shown, the feature extraction, 106, corresponds to generating an image signature and a corresponding hash, which is then transmitted to matching process 108. Matching process 108 matches hashes associated with content in database 112 in an otherwise known manner, e.g. using approximate image search as described in "Aggregating local descriptors into a compact image representation", Jégou, Douze, Schmid, Pérez, CVPR2010. It is also conceivable to use Google Inc.'s "Google Image" for the matching process.

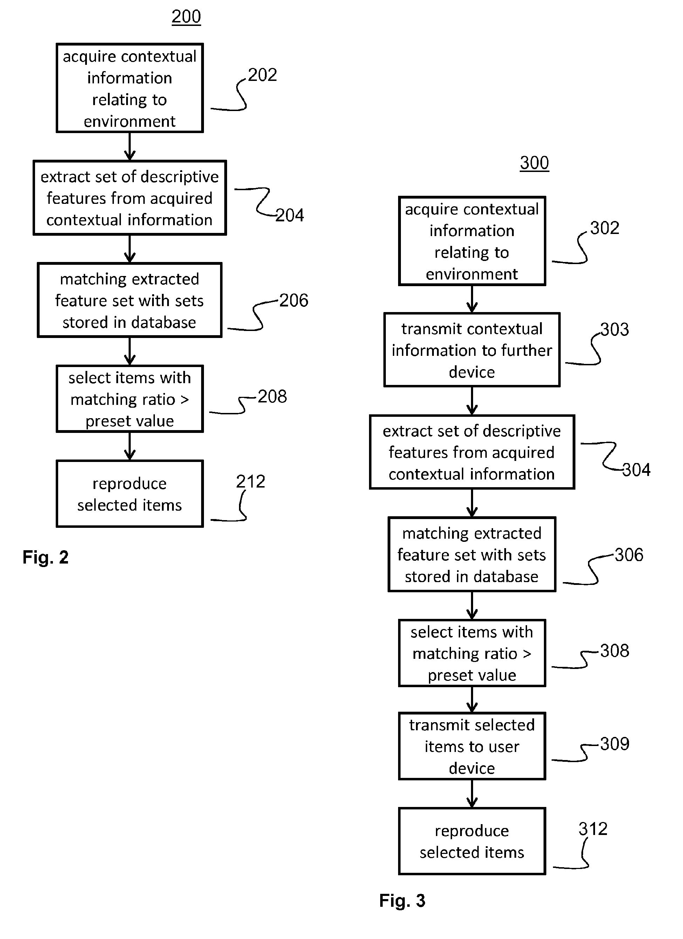

Figure 2 shows an exemplary flow diagram, 200, of the inventive method. In step 202 contextual information relating to an environment in which a user executes the method is acquired. Then, in step 204, a set of descriptive features is extracted from the previously acquired contextual information. In step 206 elements from the extracted set of descriptive features are matched against corresponding sets of descriptive features associated with content items stored in a database. Items for which a matching ratio exceeds a predetermined value are selected, step 208, and are reproduced accordingly, step 212.

Figure 3 shows a flow diagram, 300, of a method in accordance with an embodiment of the invention, in which the descriptive feature set is extracted in a device remote from the user device that was used for acquiring the contextual information. First, step 302, contextual information is acquired by a user device in a similar manner as in the first step of figure 2. In step 303 the contextual information is transmitted to a further device, remote from the user device. The further device extracts, step 304, a set of descriptive features from the received contextual information. In step 306 the further device matches elements from the extracted set of descriptive features against corresponding sets of descriptive features associated with content items stored in a database. Items for which a matching ratio exceeds a predetermined value are selected, step 308, are transmitted to the user device, step 309, and are reproduced accordingly, step 312.

In a development of the embodiment of figure 3, not shown, descriptive features are extracted from selected sources of contextual information within the user device and transmitted along with "raw" contextual information to the further device. The further device uses the received descriptive features and extracts further descriptive features from the received "raw" contextual information.

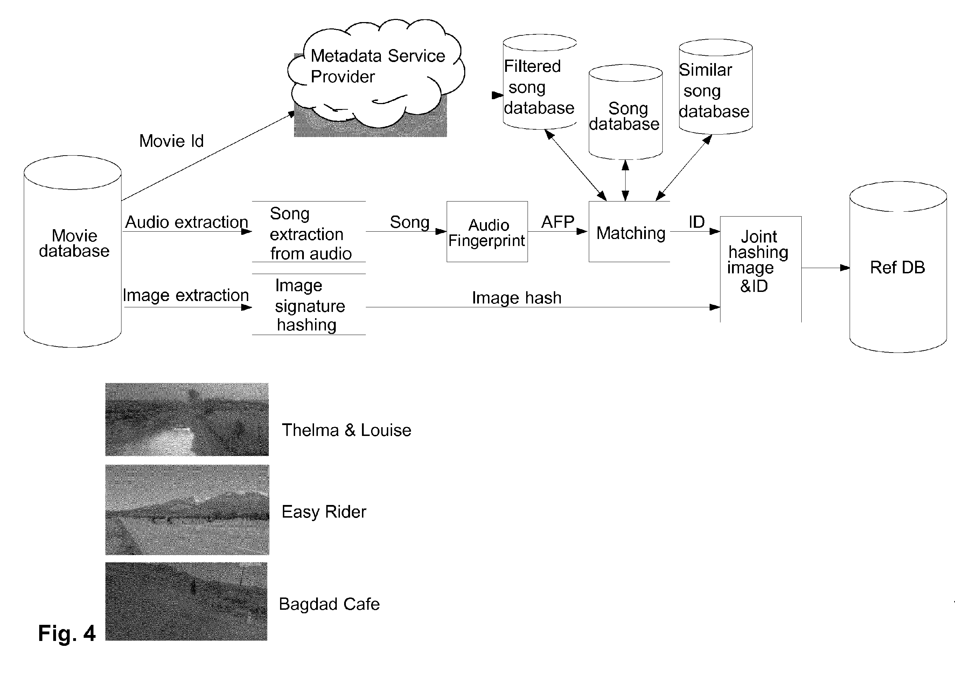

Figure 4 shows a simplified overview of the elements and high-level steps involved in populating a database storing content and associated sets of descriptive features as used in accordance with an embodiment of the inventive method. In the figure, the content is audio tracks, or music, but the principle of operation and general setup is valid for all embodiments of the present specification. More specifically, figure 4 shows the creation of the database containing the images' signatures and the associated music track IDs, referenced as Ref DB. Ref DB corresponds to database 112 of figure 1. In figure 4, the acronym AFP stands for Audio Finger Print. In an embodiment, the steps of audio analysis step, i.e. extraction, fingerprint, matching, is achieved by an audio comparison of these AFP signatures versus a song database. In one embodiment it is alternatively or additionally achieved through querying directly a website, e.g. a metadata service provider, providing the soundtracks of the movies, for example ImdB, returning a smaller filtered database of songs to query. In yet another embodiment, similar songs, e.g. songs similar to those found in the movie database, are returned to increase the potential songs playlist. Similar songs can be, e.g., identified by using an otherwise known audio similarity measure.

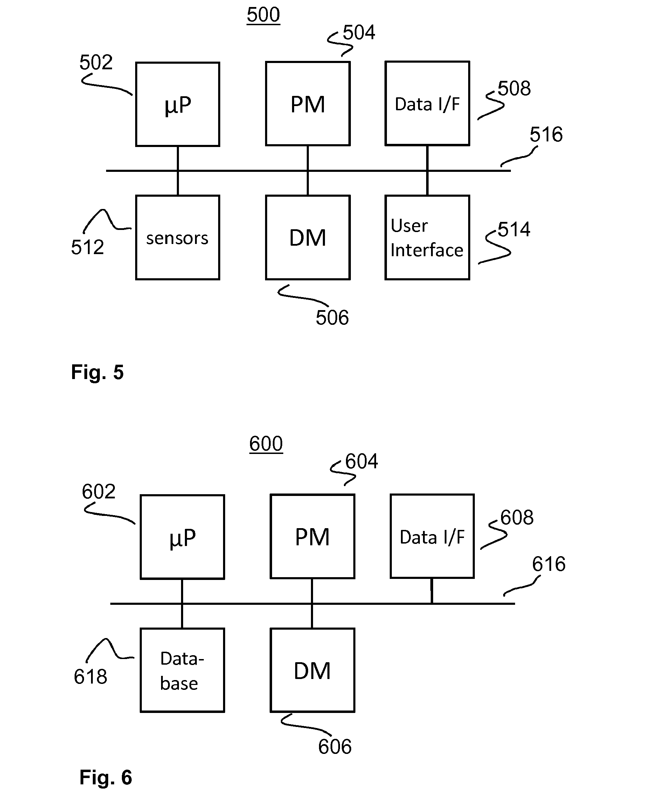

Figure 5 shows a simplified block diagram of an exemplary user device implementing an aspect of the inventive method. Microprocessor 502, program memory 504, data memory 506, data interface 508, environment sensors 512 and user interface 514 are connected via bus 516. As already discussed further above the environment sensors 512 include sensors capable of sensing various kinds of environment variables. Also as discussed further above user interface 514 provides means for user input including touch screens, input keys, dials and the like, but also output means including a display and loudspeakers, or according interfaces for connecting displays and loudspeakers. Program memory 504 stores program code that, when executed, performs the inventive method in the way described further above. Data memory 506 holds data that is created and/or required during the execution of the inventive method. As discussed further above program and data memory, 504, 506, can be of the volatile or non-volatile type. Data interface 508 provides access to additional databases or to a further device that executes part of the inventive method, e.g. extraction of descriptive features.

Figure 6 shows a simplified block diagram of an exemplary second device, remote from the user device, implementing a further aspect of the inventive method, in which the extraction of a set of descriptive features is at least in part performed the second device on environment information received from the user device. Microprocessor 602, program memory 604, data memory 606, data interface 608 and data base 618 are connected via one or more buses 616. As discussed further above the second device stores program code in program memory 604 that, when executed, performs the inventive method according to the further aspect. Data memory 606 holds data that is created and/or required during the execution of the method. Program and data memory, 604, 606, can be of the volatile or non-volatile type. Database 618 stores content items and associated sets of descriptive features that are used for creating the results list provided to the user. Data interface 608 provides access to the user device and receives and transmits data in accordance with the inventive method. Data interface 608 can also provide access to further databases storing content items and/or sets of descriptive features.

## Claims

1. A method of providing access to content stored in a database including the steps of:
- acquiring contextual information relating to an environment in which the method is performed;
- extracting a set of descriptive features from the acquired contextual information;
- matching elements from the extracted set of descriptive features with corresponding sets of descriptive features associated with content items stored in the database;
- selecting one or more content items according to a rule; and
- reproducing the selected content items.

2. A method of providing access to content stored in a database including the steps of:
- acquiring, in a first device, contextual information relating to an environment in which the method is performed;
- transmitting data corresponding to the contextual information to a second device;
- receiving, from the second device, one or more content items selected according to a rule; and
- reproducing, by the first device, the received content items.

3. A method of providing access to content stored in a database including the steps of:
- receiving, in a second device, contextual information relating to an environment of a first device;
- extracting a set of descriptive features from the contextual information;
- matching elements from the extracted set of descriptive features with corresponding sets of descriptive features associated with content items stored in the database;
- selecting one or more content items according to a rule; and
- transmitting, to the first device, one or more content items selected according to the rule, for reproduction by the first device.

4. The method of claim 2 or 3, wherein extraction of a set of descriptive features is at least partially performed in the first device, and wherein the first device transmits elements from the extracted set of descriptive features to the second device.

5. The method of one of claims 1 to 4, wherein the contextual information is acquired through sensors including one or more of the non-exclusive list comprising a camera, a microphone, a light sensor, and a receiver for modulated electromagnetic radiation.

6. The method of one of claims 1 to 4, wherein the contextual information includes one or more of the non-exclusive list comprising still images, video, geographical location, current date, current time of day, weather information, ambient light, modulated electromagnetic radiation, or ambient noise.

7. The method of one of claims 1 to 4, wherein the contextual information does not form part of the content stored in the database.

8. The method of one of claims 1 to 4, wherein descriptive features include one or more from the non-exclusive list comprising prevailing color, prevailing frequency, repetition pattern, illumination level, humidity, barometric air pressure, temperature, or dominant visual objects.

9. The method of one of claims 1 to 4, further including, in case multiple content items are selected according to the rule, adding those multiple content items to a list for subsequent user selection of individual items or sequential playback in the listed order.

10. The method of one of claims 1 to 4, wherein the content includes one or more of audio, video or text.

11. The method of one of claims 1 to 4, wherein the content is audio content, wherein the contextual information is non-audio contextual information, and wherein the content selected from the database is reproduced in accordance with a playlist.

12. The method of claim 11, wherein the audio content includes music tracks and the contextual information does not include music tracks or parts thereof.

13. The method of claim 12, wherein, once a music track is determined through the matching process, one or more further music tracks are added to a results list, which one or more further music tracks are linked with the music track determined in the matching process through pre-compiled lists accessible from the database.

14. The method of claim 11, further including providing the audio signals referenced through the playlist to an audio playback device.

15. An apparatus having a microprocessor, program and data memory, sensors for sensing information relating to an environment, a data interface, and a user input device, wherein the device is adapted to carry out a method in accordance with one or more of claims 1 or 2.
